# EUROPEAN PATENT SPECIFICATION

(11) **EP 3 075 129 B1**
(45) Date of publication and mention of the grant of the patent: **19.04.2023**
(21) Application number: 14810025.8
(22) Date of filing: 28.11.2014
(51) Int. Cl.: H04L 9/40

(54) **SYSTEM FOR PROTECTION AGAINST DDOS ATTACKS**
SYSTEM ZUM SCHUTZ GEGEN DDOS-ANGRIFFE
SYSTÈME POUR LA PROTECTION CONTRE DES ATTAQUES DE DÉNI DE SERVICE DISTRIBUÉ

(30) Priority: 29.11.2013 EP 13195144
(43) Date of publication of application: 05.10.2016
(73) Proprietor: K.Mizra LLC, Miami FL 33131 (US)
(72) Inventor: MEULENHOFF, Pieter Jan, NL-2595 DA 's-Gravenhage (NL); STRIJKERS, Rudolf Joseph, NL-2595 DA 's-Gravenhage (NL)
(74) Representative: Bosch Jehle Patentanwaltsgesellschaft mbH
(86) International application number: PCT/NL2014/050814
(87) International publication number: WO 2015/080586

(56) References cited:
- EP-A2- 1 612 674
- US-A1- 2002 059 170
- US-A1- 2002 083 175
- US-A1- 2004 042 464
- US-A1- 2005 033 858
- US-A1- 2007 300 304
- US-B2- 7 188 366

## Description

### FIELD OF THE INVENTION

The present invention relates to a distributed denial of service attack defense method and system for protecting devices connected to a network from an attack via that network, as well as to a computer-readable storage medium comprising program instructions for this method.

### BACKGROUND OF THE INVENTION

Nowadays, popular web servers can suffer from severe, albeit often only temporarily, server overload due to DDos attacks. Server overload will cause web-browsing performance to degrade in terms of increasing response times or even server unavailability. Controlling web server performance will be essential for companies or institutions having strong reliance on web services. In client-server applications a server handles service requests from a client (e.g. retrieve web page, send command to peripheral device). Usually, client and server communication is handled by a medium, such as a local area network, the internet, or a telecom network. Client-server sessions may be limited to a single service request and response, but may also include many consecutive requests and responses. The perceived quality of service (for example the response time) is affected by a number of factors such as throughput and delay in the communication medium and computing capacity of the server. A large volume of simultaneous requests may result in overloading the capacity of the server and result in late or unanswered requests. In a Distributed denial of service attack (DDos) requests arrive from a large number of clients located at different locations in the network.

Responses against DDos attacks may be found in detection strategies of a DDos attack, and taking countermeasures against it. As to detection of DDos attacks network traffic inspection may be carried out by a device in front of the networked service, which captures network traffic packets for analysis purposes. During analysis, the contents of network packets (usually protocol headers) are submitted to a set of rules or signatures which define a probability if the network packet (and related traffic from the same network session) is malicious network traffic. Based on the probability outcome of this phase, another countermeasure (for instance rate limiting) is deployed to take a prevent the DDos attack.

Another detection method is backscatter traffic analysis. DDos attack network traffic sent by clients often make use of incorrect source network addressing, (IP spoofing) which means that network traffic contains a source address pointing of another system, somewhere on the internet instead of the client sending the packet. This kind of network traffic can result in so called backscatter traffic: The server under attack sends network traffic to the spoofed address of the incoming network packet. So called network telescopes (CAIDA), are specifically designed to capture backscatter traffic and by that are able to detect ongoing DDos attacks. When admission control is applied, for example, using a computational model, a computer server can predict the likeliness of arriving in an overload situation See: Meulenhoff et al., Intelligent overload control for composite web services, Service-Oriented Computing, 2009. These methods may predict the expected computational load in the near future upon the initiation of a new client-server session. When the expected computational load exceeds a threshold: the capacity of the server, the new session is not admitted to the service (see blocking). Such an overload situation could be an indication of an ongoing DDos attack, which at the same time could trigger admission control routines as a counter measure.

Further known countermeasures include admission control schemes known as rate limiting, throttling or blocking mechanisms. Rate limiting switches, routers or servers control the rate of traffic transmitted or received on a network interface. Network traffic which exceeds a specific rate limit is dropped or delayed. In case of a DDos attack, a rate limiting device can be used to protect a server from becoming overloaded, and even crash. At the same time, rate limiting alone does not prevent the service from becoming unreachable.

In its most extreme form, rate limiting or throttling is equal to blocking (infinite delay). State full firewalls are an application of network traffic inspection. Where a stateless firewall checks network traffic based on the contents of individual packet, a statefull firewall does a check in the context of the ongoing communication session.

US patent No. 7 188 366 discloses a method that detects attack packets in the edge router of the LAN accommodating the server. The packets are then destroyed, the address of the upstream routers close to the attack source are retrieved, and attack source retrieval modules are transmitted from the edge router to all the upstream routers. When the router at the uppermost stream is reached, a protection module is executed to destroy the attack packets. When the attacks cease, the protection module deletes itself and the protection process is ended.

EP1612674 concerns a method of handling an access request to an information processing system. It is detected whether or not the system is or threatens to be overloaded. In such case, a type of access request is detected and compared with a type of system overload. Access requests deemed to contribute to overload situations are not-admissible when exceeding predetermined threshold levels of a specified type of access control parameters. It does however not provide a solution to address requests that are rendered inadmissible.

US20070300304A1 describes a SIP (session initiation protocol) server which performs a redirect to separate real from 'fake' messages. It uses an additional resource: the SIP 'washing machine', that provides additional server processing in case of DDos detection. Fake SIP messages cannot respond to a redirection request and to this end a SIP washing machine is installed and a redirected server location as a fixed back up server.

US20020083175A1 also redirects traffic in case of a DDos attach, in particular, a 'victim' ip adres is redirected to een 'guard' and/or a private ip adress. This solutions merely concerns traffic redirection, while no 'offloading' of server functions.

US20040042464A1 mentions that in case of DDos TCP handling can be executed on a dedicated scalable transmission protocol offload engine (TOE) arranged on a network interface card (NIC). The transmission control protocol offload engine (TOE) may be utilized to redistribute TCP processing from the host system onto specialized processors which may have suitable software for handling TCP processing. The TCP offload engines may be configured to implement various TCP algorithms for handling faster network connections, thereby allowing host system processing resources to be allocated or reallocated to application processing.

US20050033858 describes a 'load balancing service for a plurality of customers performs load balancing among a plurality of customer Web servers'. A load balancing service allow DNS servers to select the proper content servers for clients. In fact the service acts as a caching service. This is just an intermediary service for reproducing content that can be cached and stored, e.g., images, video, text, and/or software.

US20020059170 similarly describes a load balancing system.

A problem associated with the prior art based on network traffic filtering is that some knowledge about the content of the malicious network traffic is desired. A detection mechanism based on inspecting network traffic may lead to false positives, and undetected DDos attacks. This is illustrated by a client - server program that makes use of encrypted or obfuscated network traffic. A network device inspecting network traffic cannot get access to the encrypted or obfuscated data, and therefore cannot derive the type of communication and decide if the session is legitimate or not.

### SUMMARY OF THE INVENTION

The scope of the invention is defined by the appended claims, and in particular by the independent claims 1, 10 and 11. Accordingly a method according to claim 1 is provided for handling server overload.

Accordingly a solution is provided for transparently uploading to and executing server-software on a client or third party device in response to an overload of service requests. By providing a means to host server functionality at multiple locations that are to a group of clients, overload situations caused by a DDos attack can be mitigated.

One advantage of this solution in contrast to prior art is that no knowledge about the content of the malicious network traffic is required. The solution may therefore be ideal for zero-day (not seen before) attacks. Current prior art based on network traffic filtering is based on network layer based information. Since the mitigation of DDos attacks takes place at application level (a server function is replicated into the direction of the client), the solution is better suitable for mitigation of application layer DDos attacks. This invention provides a solution for transparently uploading to and executing server-software on a client or third party device in response to an overload of service requests.

According to the invention the server further comprises a resource provider lookup function to select a resource from said resource providers. Without straining system resources the lookup function may form an effective way to redirect the client request to an available resource provider. Additionally, or alternatively, selection may be provided by a client request advertisement indicating a selectable resource. This may be the case if the client has available resources, or has functionality to detect available resources. This may be used to the advantage of minimal server loading.

In an embodiment the offloaded server function may in turn comprise one or more offloadable server functions (OSF) that provide a part or all of the functionality of the server application, and which may be loaded on other resources in another network location. This is convenient for transferring resources to another device, which may in turn forward the functionality to resources that are located on suitable locations in the network, that may not be known by the lookup function of the primary server.

According to the invention addresses of communication devices are retrieved that are close to attack sources at the upstream; and the offloaded server function are transmitted to a resource provider in a defence position at the upstream. This has the advantage of minimizing server load and providing a contagion mechanism of the attack, which may throttle an attacker. For example, a resource provider lookup function may comprise an attack source determining function able to extract the address of a communication device to be chosen as an upstream defence position from the candidates of upstream communication device close to the attack sources retrieved by the resource provider lookup function.

In a further embodiment, the plurality of resource objects comprise at least one of physical and virtual resources.

### FIGURES

Figure 1 shows a schematic arrangement of client-server interaction according to an embodiment of the invention.
Figure 2 shows a detailed embodiment of the client server interaction using a redirect to third party resources;
Figure 3 shows a schematic flow of actions depending on a detected server overload condition;
Figure 4 shows an upstream redirection of offloaded server functions;
Figure 5 shows a detailed embodiment of client server interaction using a redirect to local resources

### DETAILED DESCRIPTION

A method is presented that enables a server to make use of client or third party resources. The client request data contains data about the network location of the client. The server may store this location data of each client. Before or after execution of the request, the server determines if the server is in or close to an overload situation. If the server is not in an overload situation, no further changes are needed. If the server is in or close to an overload situation, the server selects a new location in the network from the database with all client locations. The server allocates a new instance of the server function at a resource provider on (or dose to) this location. The server may select one or more clients from the database. The selected clients are transparently redirected to the offloaded server function. Subsequent requests from clients are handled by the offloaded server function.

The offloaded server function employs the same functionality and thus may decide to offload a server function to another network location.

To execute the method a system provides the described functionality may be composed of the following functional components.

Server Function (SF) provides (apart of) the functionality of a server application. A server application may consist of one or more distinct server functions.

Offloaded server function (OSF) provides (apart of) the functionality of the server, which may be loaded on other resources.

Resource Provider (resource provider) is a third party or client devicewhich is able to provide resources for hosting an offloaded server function.

Overload Detection Function (overload detection function) use information from client requests and current resource consumption of the server function to determine if the server function is in or dose to an overload situation. Unless otherwise defined, all terms (including technical and scientific terms) used herein have the same meaning as commonly understood by one of ordinary skill in the art to which this invention belongs as read in the context of the description and drawings. It will be further understood that terms, such as those defined in commonly used dictionaries, should be interpreted as having a meaning that is consistent with their meaning in the context of the relevant art and will not be interpreted in an idealized or overly formal sense unless expressly so defined herein. In some instances, detailed descriptions of well-known devices and methods may be omitted so as not to obscure the description of the present systems and methods. The term "and/or" includes any and all combinations of one or more of the associated listed items. It will be further understood that the terms "comprises" and/or "comprising" specify the presence of stated features but do not preclude the presence or addition of one or more other features.

Throughout the application, any function for carrying out the disclosed methods, in particular, as further clarified below: a server function; an offloaded/offloadable server function; load detection function; resource provider lookup function; and attack source determining function is implemented in hardware and/or software and as structurally identifiable by the function it perform in the system; i.e. the function is physically implemented in hardware and/or software or information structures transmitted through the network. The function may be implemented in hardware or software, to provide dedicated processing circuitry that processes input data read from system resources. A server function may e.g. be provided by a connected physical network device, but may also be formed as a virtual device, functioning in a network, and which may be implemented on a hardware resource that can be reached via network communication. These functions may be executed by one or more processors configured to perform operational acts in accordance with the present systems and methods, such as to provide control signals to the various other module components. The processor may be a dedicated processor for performing in accordance with the present system or may be a general-purpose processor wherein only one of many functions operates for performing in accordance with the present system. The processor may operate utilizing a program portion, multiple program segments, or may be a hardware device utilizing a dedicated or multi-purpose integrated circuit. Any type of processor may be used such as dedicated or shared one. The processor may include microcontrollers, central processing units (CPUs), digital signal processor s (DSPs), ASICs, or any other processor(s) or controller(s) such as digital optical devices, or analog electrical circuits that perform the same functions, and employ electronic techniques and architecture. The controller or processor may further comprise a memory that may be part of or operationally coupled to the controller. The memory may be any suitable type of memory where data is stored. Any medium known or developed that can store and/or transmit information suitable for use with the present systems and methods may be used as a memory. The memory may also store user preferences and/or application data accessible by the controller for configuring it to perform operational acts in accordance with the present systems and methods.

The invention is described more fully hereinafter with reference to the accompanying drawings, in which embodiments of the invention are shown. This invention may, however, be embodied in many different forms and should not be construed as limited to the embodiments set forth herein.

The description of the exemplary embodiments is intended to be read in connection with the accompanying drawings, which are to be considered part of the entire written description. In the drawings, the size and relative sizes of systems, components, layers, and regions may be exaggerated for clarity. Embodiments are described with reference to schematic illustrations of possibly idealized and/or intermediate structures of the invention.

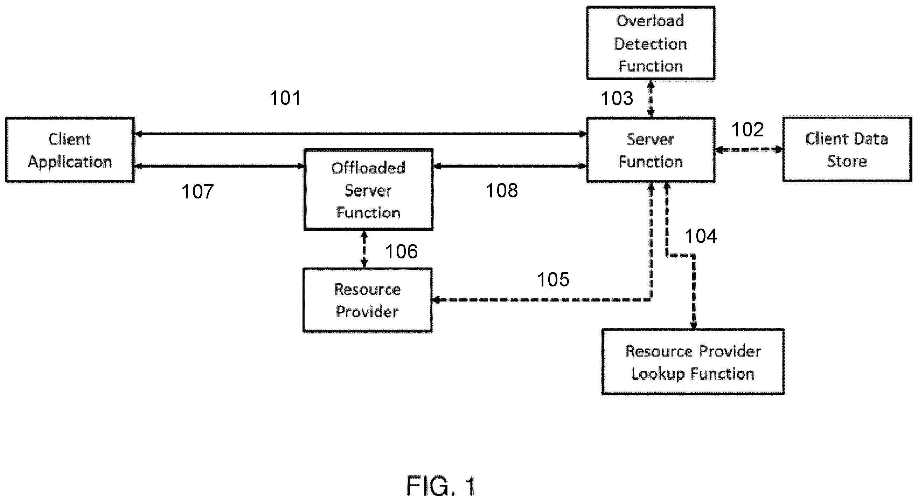

Figure 1 illustrates in more detail a system that provides a method for handling server overload. The client application sends a request to the server application with operational parameters of the request (101). The operational parameters may contain (a reference to) location information (e.g. a network address, IP address, credentials, session key). The server may store location information of the client in a datastore (e.g. in a database) (102). Overload detection of the server function can be done by several methods e.g. using a resource load threshold (CPU limit) or a model based approach based on the average service time of fulfilling the request e.g. of a broker type disclosed in Meulenhoff et al., Intelligent overload control for composite web services, Service-Oriented Computing, 2009. If the likeliness of an overload situation is low, the request is handled by the server function (101). Another example of an overload detection function is given in EP 1612674 that receives the operational parameters of the request (103), and that can read current resource consumption of the server, to
result in a calculated likeliness of the server function becoming in an overload situation.

In case of the overload detection function estimates a high overload likeliness (103), the server function redirects detected client requests to the offloaded server function (101 and 107) on a selected resource provider in response to the load detection function detecting an overload situation. This can be done, for instance, by defining a location from the datastore (102) for a new server location. Among other methods, defining a new server location could be done by clustering (e.g. with k-means where k, the number of clusters is set to two), or by a graph based approach, where the graph is split and assigned to a new server. The server can make use of a resource provider lookup function to get the location and contact details of a resource provider (104), and allocates an offloaded server function at a resource provider on this location (105 and 106). A subset of clients which are assigned to the offloaded server function are redirected by the server function (e.g. by HTTP redirect or DNS reconfiguration). In this case the client function makes use of the offloaded server function (107). The offloaded server function may communicate with another serverfunction (108) executed on the same physical device or elsewhere in a physical network.

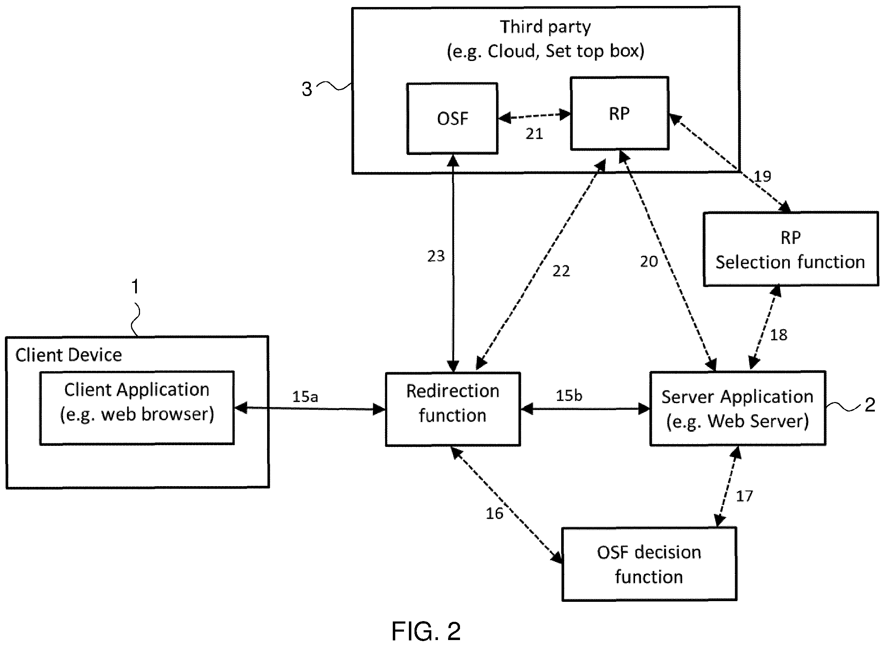

Figure 2 shows user or client terminal 1 and server 2 connected via e.g. the internet. Terminal 1 may send, via the internet, an access request (15a, 15b) to server 2 in a redirection function. The client request sent to the server application (2) may contain an advertisement with information about one or more resource providers 3 (e.g. a cloud resource provider, Azure, Amazon, provided by an ISP) as illustrated in Figure 2. The advertisement may also be sent at another moment via another path to the server; or in the alternative, the advertisement may be sent by resource providers themselves via a designated protocol. The advertisement may contain a list of data (e.g. a URL, operational parameters, settings, credentials, tokens, cryptographic keys) about local and third party resource providers. If an offloaded server function is available and an offloaded server function decision function decides to make use of the offloaded server function (16) a redirection function redirects the request from the client application to the offloaded server function (23). The location of the redirection and the offloaded server function decision function can vary: at the client device, server application or on a device (e.g. proxy server, router, deep packet inspection device) on the path between client and server. A redirection function can operate at various levels and could be implemented by network address translation, network traffic routing (routing table configuration), nameservice lookup (e.g. DNS lookup), application specific proxy (e.g. web proxy server). If no redirection function is provisioned, the request arrives at the server (15b). The server uses an offloaded server function decision function (17) and a resource provider selection function (18) to decide if it is more optimal to place an offloaded server function and which resource to use (which resource provider to choose) to host the offloaded server function. Input for the offloaded server function decision function and the resource provider selection function are: expected resource consumption of the offloaded server function, resource provider information (URL, access credentials, current status, interface protocol) provided by the client, resource usage data provided by third party resource providers. The resource provider selection function, e.g. implemented in a client store as illustrated in Figure 1 may query known resource providers (19) for up to date resource usage data (e.g. computing load, memory consumption, network latency). After selection of the optimal location, the resource provider is requested by the Server 2 to create an offloaded server function (20) (for instance via a HTTP webservice call). An offloaded server function is created (21) by the resource provider on the third party 3. The resource provider also provisions a redirection function from the client application to the offloaded server function (22). The location of the redirection function can vary: at the client device (e.g. a web proxy, routing, DNS configuration or plugin of a web browser), at the location of the server (e.g. a HTTP redirect, plugin of the web server), or somewhere on the path between client and server (e.g. application protocol proxy, routing, DNS). When the redirection function, offloaded server function, and client device are located in a computer network under control of the same organization, the redirection function may also be implemented in the form of reconfiguration of the same computer network (e.g. configuration of routers, proxy servers, DNS configuration in an ISP network or configuration of a home router in a home network where a offloaded server function is installed on a local device like a settop box) so that the request from the client can be directly routed to the offloaded server function. Finally, the request from the client is redirected to the offloaded server function and processed there (23).

Implementation of redirection functions an offloaded server functionality with Java Webstart

Here we describe the process of the invention in case of an implementation for HTTP and Java Web Start. The client application is a web browser application. The offloaded server function could be implemented by spawning a new process (of native code), running a script in a script engine, starting a new virtual machine in a hypervisor. Here we use a Java Web Start application which is running at the client computer. A minimal example of the HTTP request sent by the client (step 7a, 15a) is shown below.

```
   GET /webapplication HTTP/1.1
   Host: www.server.com
   Resource-Provider:http://www.client.com/ResourceProvider
```

This is a request for server application '/webapplication' at server www.server.com. Information about local resources is provided through the HTTP header attribute 'Resource-Provider' telling that a resource provider is available at 'http://www.client.com/ResourceProvider' (e.g. at the address of the client). Two possible options for adding this HTTP header attribute to the request can be done by creating a browser plugin or proxy server on the path between client and server that insert to attribute to the request.

The redirection function can be implemented in various forms: a plugin added to the web browser (e.g. a firefox extension allows to modify request content), a HTTP proxy server installed on the client computer (e.g. with the apache HTTP server it is possible to rewrite requests and redirect incoming requests to other systems, add headers to the forwarded request).

The resource provider can be implemented in the same plugin of the webbrowser or HTTP proxy which implements the redirection function. The resource provider also runs a webservice so that it is accessible for the server. The request to the resource provider for creating a new offloaded server function (11,20) gives the resource provider the location of the Java Webstart program (a datafile to be downloaded from some location)

```
    GET
    /ResourceProvider?operation=create&location=http://www.server
    .com/server.jnlp HTTP/1.1
    Host: www.client.com
```

Both the operation (create an offloaded server function) and the location of the Java Web Start program are passed as arguments to the request to the resource provider. The resource provider parses the request arguments, downloads the Java Web Start program from the specified location, after which it is started. The resource provider changes the configuration of a redirection function (a plugin to the web browser or HTTP proxy on the client) to only redirect requests for the server functionality implemented by the offloaded server function to the new offloaded server function (e.g. a redirection rule based on the URL). After completion of this process the resource provider response to the server is to inform the server the location of the offloaded server function:

```
   HTTP/1.1 200 OK
   Date: Wed, 22 Nov 2012 11:31:00 GMT
   Content-Type: text/html
   ofs=http://www.client.com/osf
```

Now the server can generate a redirection response to the original request of the client.

```
   HTTP/1.1 301 Moved Permanently
   Location: http://www.client.com/osf
```

New requests of the client for the server are intercepted by the redirection function implemented by the web browser plugin or a proxy server and redirected to the local Java Web Start application. In this case, the Java Web Start application is a java program which implements a webserver.
offloaded server function hosted by a cloud provider

The offloaded server function can also be hosted by a third party resource provider. Examples of such third parties are cloud providers like amazon EC2 or windows azure and Google App Engine (which provides a platform as a service or PaaS). In case of the Amazon EC2 service, the user also needs to advertise access credentials of the amazon service to the server. In case of Amazon these credentials are formed by the AWS Access Key, to be used to query the EC2 interface (see: http://docs.amazonwebservices.com). This provides access to the Amazon EC2 interface for the server and Resource provider selection function. Here the role of the resource provider is played by the Amazon EC2 service. The interfaces to this service (11,19,20) is provided by the EC2 webservice.

Implementation of the offloaded server function placement decision function and Resource provider selection function can be done by adding an extension to the webserver. Most webserver implementations (Internet Information Server, Apache HTTP server, Nginx) allow to add extensions that add additional processing functionality to an incoming request. A sample implementation of the offloaded server function decision function is shown below.

```
   DecisionFunction(
   osf_array[], // array of offloaded server function's already running for
   the client
   requirements // resource requirements of the offloaded server function
    ) {
   // iterator over all available offloaded server function's
   foreach (osf in osf_array ) {
          // if the offloaded server function has enough free resources
   if ( osf.getAvailableResources > requirements ) {
                     // return the reference to this offloaded server function
                     return osf;
    }
    }
   // no offloaded server function was found with enough resources
   // or no offloaded server function was available at all.
   return NULL;
  }
```

Input for this function is an array of known offloaded server functions of this server and client and a data-structure describing the required resources of the offloaded server function. In an iteration over the list of offloaded server functions, the requirements are compared to the available resources on the offloaded server function. The first offloaded server function with enough resources is returned, an input for the redirection function. If no offloaded server function was found, NULL is returned which is the signal to create a new offloaded server function.

A sample implementation in psuedocode of the Resource provider selection function is shown below:

```
   SelectionFunction(
       rp_array[], // array of resource providers
       requirements // resource requirements of an offloaded
       server function
       ) {
       // iterator over all available resource providers
       foreach (rp in rp_array ) {
           // get accurate data on available resources at each
           resource provider
          rp.updateAvailableResources();
           // if the resource provider has enough resources
               if ( rp.getAvailableResources > requirements ) {
                     // return the reference to this resource
                     provider
                     return rp;
               }
       }
       // no resource provider was found with enough resources
       // or no resource provider was available at all.
       return NULL;
    }
```

Input for this function is an array of known resource providers and a data-structure describing the required resources for a offloaded server function. In an iteration over the list of resource providers, the requirements are compared to the available resource of the resource provider. In this example, each resource provider is queried to get the latest data on available resources. If a resource provider is returned by the function, this resource provider is used for creating a new offloaded server function. If nothing is returned (NULL), no resource provider is found, and the server must resort to a default path and generate the response itself or generate a server error (e.g. a HTTP 503 Service Unavailable status code)

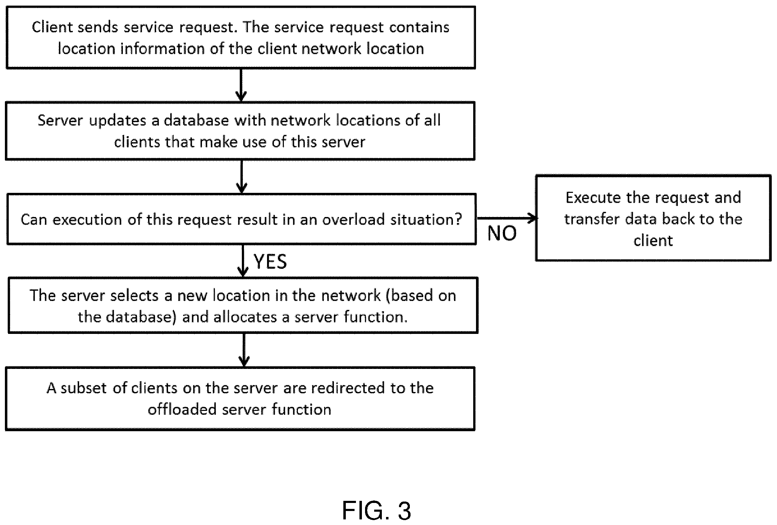

Figure 3 shows a further illustration of overload handling in the network arrangement as disclosed in Figure 1 or Figure 2, in response to a DDos attack. First, a service request is sent by a client. The service request may contain location information on the client network location. In response, the server may update a database in the network location of clients making use of this server. Next, it is determined by the overload detection function whether execution of the request may result in an overload situation. If NO, the request is executed and data is transferred back in a conventional way. If YES, the server selects a new location in the network, based on the database and allocates an offloaded server function on selected resource, selected by a resource provider lookup function provided on the server to select a resource from said resource providers. Next, subsets of clients identified by the database are redirected to the offloaded server function provided on the selected resource provider.

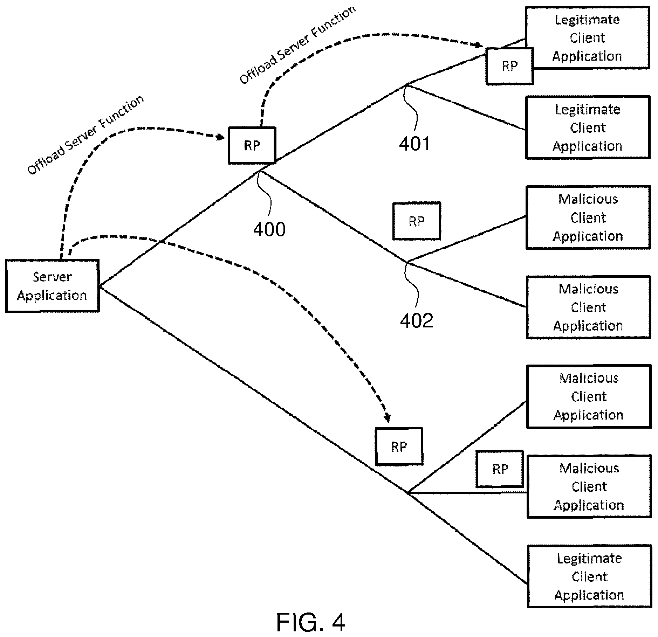

In a way similar to US7188366 Figure 4 illustrates an embodiment wherein it may be determined if installation of an offloaded server function is possible on an upstream device 400, i.e. a device that is virtually and or physically located upstream in a path between the client and the server. If the result of the determination is YES the upstream device 400 is challenged to determine whether it has resources to redirect detected client requests to an offloaded server function to be implemented on the device. If the installation is not possible (i.e. if the result of the determination is NO), the routine moves to a step wherein the server 2 retrieves adjacent devices that might become upstream routers by referring to an adjacent router database that may be provided in the upstream device. In the case of the router 400, the routers 401 and 40 2 are extracted as adjacent routers. In a subsequent step, the attack source retrieval module holding information on the DDoS attack is duplicated and sent to selected upstream devices that are identified as resource providers for executing the offloaded server function. Parts of the offloaded server function may be executed on the client application. Consequently, the method includes retrieving addresses of communication devices that are close to attack sources at the upstream and transmitting the offloaded server function to a resource provider in a defence position at the upstream. To this end the resource provider lookup function may comprise an attack source determining function section able to extract the address of a communication device to be chosen as an upstream defence position from the candidates of upstream communication device close to the attack sources retrieved by the resource provider lookup function.

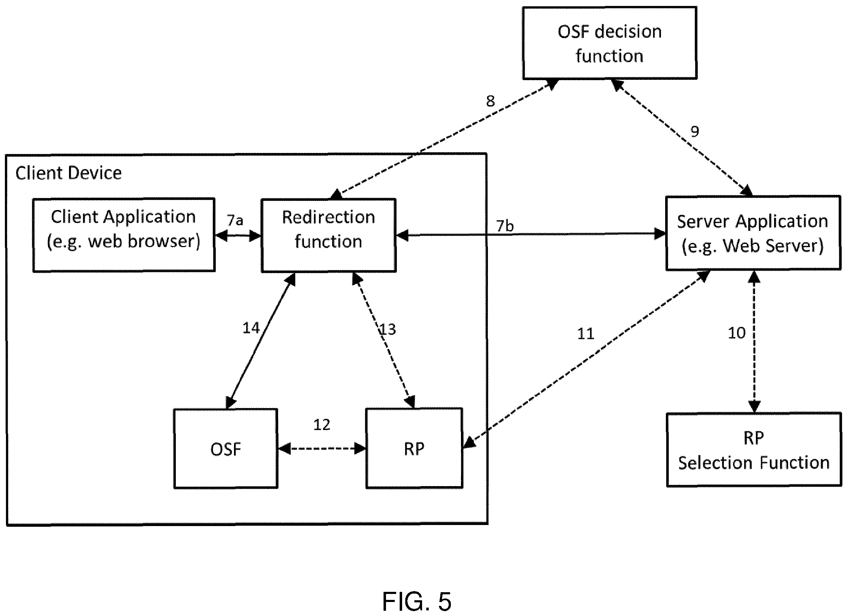

Figure 5 illustrates to that end a client device sending a request to the server application with operational parameters of the request (7a, 7b). While the preceding has been illustrated with reference to other servers, or router devices available in the network, including third party resources, the mechanism is also applicable with resources advocated by clients themselves. The request may contain an advertisement of information (e.g. a URL, operational parameters, settings, credentials, tokens, cryptographic keys) of one or more Resource providers at the client device. This advertisement may also be sent to the server via another path or at another time. If an offloaded server function decision function makes the decision to use an offloaded server function (8) and a offloaded server function is available at the client, a redirection function redirects the request to the offloaded server function (14). Otherwise, the request arrives at the server application (7b).

A possible implementation of the advertisement of one resource provider by the client (7b) is by embedding the advertisement in a HTTP request sent to the server application.

The server application may use the information in the advertisement and submit it to a offloaded server function decision function (9) and a Resource provider selection function (10) to decide whether to create a offloaded server function, and to select the most optimal location for the offloaded server function, and thus which resource provider to choose. Both functions (Resource provider selection function, offloaded server function decision function) compare the information sent in the advertisement by the client to the resource requirements of an offloaded server function (e.g. the Resource provider selection function can decide to create a offloaded server function when the resource provider has sufficient processing power available). If it is decided to create an offloaded server function, the server sends a create offloaded server function request to the selected resource provider (11). Amongst other possible solutions, the request (11) sent by the server to the resource provider may be embedded in a HTTP request. Information in the request would be the requested operation (create an offloaded server function), and operational parameters like (a reference to ) an image for the offloaded server function.

The resource provider processes the create offloaded server function request and creates a new offloaded server function (12). The resource provider also provisions a redirection function (13). The redirection function is a means to redirect requests from the client to the offloaded server function. Provisioning of this function could be mean configuration of the client device (e.g. update local DNS information, configure a proxy service, change a routing table, firewall, change configuration of a web browser plugin, client application configuration) in order to redirect requests to the offloaded server function (14). After provisioning, the server may redirect the client request to the offloaded server function (e.g. with an HTTP redirect).

Finally, the above-discussion is intended to be merely illustrative of the present system and should not be construed as limiting the appended claims to any particular embodiment or group of embodiments.

The specification and drawings are accordingly to be regarded in an illustrative manner and are not intended to limit the scope of the appended claims.

In interpreting the appended claims, it should be understood that the word "comprising" does not exclude the presence of other elements or acts than those listed in a given claim; the word "a" or "an" preceding an element does not exclude the presence of a plurality of such elements; any reference signs in the claims do not limit their scope; several "means" may be represented by the same or different item(s) or implemented structure or function; any of the disclosed devices or portions thereof may be combined together or separated into further portions unless specifically stated otherwise. The mere fact that certain measures are recited in mutually different claims does not indicate that a combination of these measures cannot be used to advantage and are deemed explicitly disclosed by the subject application.

## Claims

1. A method for handling server overload, comprising:
- providing a part or all of the functionality of a server application (2) by a server function; said server function comprising one or more offloadable server functions that provide a part or all of the functionality of the server application, and which may be loaded on other resources;
- detecting a server load by a load detection function (3) constructed to determine if the server function is in or close to an overload situation; and
- providing resource providers (5, 18) able to provide resources for hosting said offloadable server functions,
- selecting one of the resources from the resource providers, by a resource provider lookup function (4) comprised in the server;
- redirecting detected client requests (8) to an offloaded server function (23) on the selected resource (3, 6) in response to the load detection function detecting an overload situation,
the method being **characterized in that** it further comprises
- retrieving addresses of communication devices that are close to attack sources at the upstream;
- transmitting the offloaded server function to a resource provider in a defence position at the upstream.

2. A method according to claim 1, wherein a selection is provided by a client request advertisement indicating a selectable resource.

3. A method according to claim 1 wherein the offloaded server function is executable on a resource provider and wherein the offloaded server function in turn comprises offloadable server functions that provide a part or all of the functionality of the server application, and which may be loaded on other resources in another network location.

4. Method according to any of the preceding claims, wherein the resource providers comprise at least one of physical and virtual resources.

5. Method according to claim 4, wherein the physical resources comprise at least one of CPU load, and communication bandwidth.

6. Method according to claim 4 or 5, wherein the non-physical resources comprise at least one of a number of database reads pertime unit, a number of database writes per time unit, a number of requests per time unit, and a number of simultaneous sessions.

7. Method according to any of the preceding claims, wherein an information processing system comprises system control means, interface means and client application means, and wherein the method comprises next steps when the information processing system is overloaded or threatens to be overloaded:
- it is detected whether the system control means, the interface means or the relevant client application means are or are threatened to be overloaded;
- it is detected whether a requested access will load the system control means, the interface means or the relevant client application means;
- if the requested access is not deemed to contribute to the overload of the relevant system means, the requested access is judged to be admissible and/or if the requested access is deemed to load the relevant system means, the requested access is judged to be not-admissible.

8. Method according to claim 7, several clients requesting for access to the information processing system and service level indicators being assigned to those clients, the method comprising that if the kind of requested access is deemed to contribute to the system overload, the requested access of clients having a relative high service level indicator is given preference or priority over clients having a relative low service level indicator.

9. Method according to any of claims 7 or 8, wherein the requested access, deemed to contribute to the system overload, is judged to be admissible for clients having a relative high service level indicator and/or not-admissible for clients having a relative lowservice level indicator.

10. System for handling an access request to an information processing system, comprising an apparatus that is communicatively connected to the information processing system, whereby the apparatus is further connected to a network for transmitting the access request, **characterised in that** the system comprises means adapted to perform the steps of claims 1-9.

11. Non-transient computer-readable storage medium with program instructions that, when run on a system according to claim 10 , cause the system to perform the method of claims 1-9.

## Patentansprüche

1. Verfahren zum Behandeln von Serverüberlastung, das aufweist:
- Bereitstellen eines Teils oder der Gesamtheit der Funktionalität einer Serveranwendung (2) durch eine Serverfunktion, wobei die Serverfunktion eine oder mehrere abladbare Serverfunktionen aufweist, die einen Teil oder die Gesamtheit der Funktionalität der Serveranwendung bereitstellen, und die auf andere Ressourcen geladen werden können;
- Ermitteln einer Serverlast durch eine Lastermittlungsfunktion (3), die dazu ausgelegt ist zu ermitteln, ob sich die Serverfunktion in oder nahe einer Überlastungssituation befindet; und
- Bereitstellen von Ressourcenprovidern (5, 18), die dazu in der Lage sind, Ressourcen zum Hosten der abladbaren Serverfunktionen bereitzustellen,
- Auswählen einer der Ressourcen von den Ressourcenprovidern durch eine Ressourcenprovider-Nachschlagefunktion (4), die in dem Server enthalten ist;
- Umleiten von ermittelten Client-Anfragen (8) an eine abgeladene Serverfunktion (23) auf der ausgewählten Ressource (3, 6) im Ansprechen darauf, dass die Lastermittlungsfunktion eine Überlastungssituation ermittelt,
wobei das Verfahren **dadurch gekennzeichnet ist, dass** es des Weiteren aufweist
- Abrufen von Adressen von Kommunikationsgeräten, die sich nahe an Angriffsquellen im Upstream befinden;
- Senden der abgeladenen Serverfunktion an einen Ressourcenprovider in einer Abwehrposition im Upstream.

2. Verfahren nach Anspruch 1, wobei eine Auswahl durch eine Clientanfrageankündigung bereitgestellt wird, die eine auswählbare Ressource angibt.

3. Verfahren nach Anspruch 1, wobei die abgeladene Serverfunktion auf einem Ressourcenprovider ausführbar ist, und wobei die abgeladene Serverfunktion wiederum abladbare Serverfunktionen aufweist, die einen Teil oder die Gesamtheit der Funktionalität der Serveranwendung bereitstellen, und die auf andere Ressourcen an einer anderen Netzwerkstelle geladen werden können.

4. Verfahren nach einem der vorhergehenden Ansprüche, wobei die Ressourcenprovider wenigstens eines aufweisen von physikalischen und virtuellen Ressourcen.

5. Verfahren nach Anspruch 4, wobei die physikalischen Ressourcen wenigstens eines aufweisen von CPU-Last und Kommunikationsbandbreite.

6. Verfahren nach Anspruch 4 oder 5, wobei die nicht-physikalischen Ressourcen wenigstens eines aufweisen von einer Anzahl von Datenbank-Lesen pro Zeiteinheit, einer Anzahl von Datenbank-Schreiben pro Zeiteinheit, einer Anzahl von Anforderungen pro Zeiteinheit und einer Anzahl gleichzeitiger Sitzungen.

7. Verfahren nach einem der vorhergehenden Ansprüche, wobei ein Informationsverarbeitungssystem Systemsteuermittel, Schnittstellenmittel und Clientanwendungsmittel aufweist, und wobei das Verfahren nächste Schritte aufweist, wenn das Informationsverarbeitungssystem überlastet ist oder droht, überlastet zu werden:
- es wird ermittelt, ob das Systemsteuermittel, das Schnittstellenmittel oder das relevante Clientanwendungsmittel überlastet sind oder überlastet zu werden drohen;
- es wird ermittelt, ob ein angeforderter Zugriff das Systemsteuermittel, das Schnittstellenmittel oder das relevante Clientanwendungsmittel belasten wird,
- wenn erachtet wird, dass der angeforderte Zugriff nicht zur Überlastung des relevanten Systemmittels beiträgt, wird der angeforderte Zugriff als zulässig erachtet, und/oder wenn erachtet wird, dass der angeforderte Zugriff das relevante Systemmittel belasten wird, wird der angeforderte Zugriff als nicht zulässig erachtet.

8. Verfahren nach Anspruch 7, wobei mehrere Clients Zugriff zu dem Informationsverarbeitungssystem fordern und diesen Clients Dienstebenenindikatoren zugewiesen werden, wobei das Verfahren aufweist, dass, wenn erachtet wird, dass die Art des angeforderten Zugriffs zur Systemüberlastung beiträgt, dem angeforderten Zugriff von Clients, die einen relativ hohen Dienstebenenindikator haben, gegenüber Clients, die einen relativ niedrigen Dienstebenenindikator haben, Vorzug oder Priorität gegeben wird.

9. Verfahren nach einem der Ansprüche 7 oder 8, wobei der angeforderte Zugriff, von dem erachtet wird, dass er zu der Systemüberlastung beiträgt, für Clients, die einen relativ hohen Dienstebenenindikator haben, als zulässig erachtet wird und/oder für Clients, die einen relativ niedrigen Dienstebenenindikator haben, als nicht zulässig erachtet wird.

10. System zum Behandeln einer Zugriffsanforderung für ein Informationsverarbeitungssystem, das eine Vorrichtung aufweist, die kommunikativ mit dem Informationsverarbeitungssystem verbunden ist, wobei die Vorrichtung des Weiteren mit einem Netzwerk zum Übertagen der Zugriffsanforderung verbunden ist,
**dadurch gekennzeichnet, dass**
das System Mittel aufweist, die dazu ausgelegt sind, die Schritte der Ansprüche 1 bis 9 durchzuführen.

11. Nicht flüchtiges computerlesbares Speichermedium mit Programmbefehlen, die, wenn sie auf einem System nach Anspruch 10 laufen, veranlassen, dass das System das Verfahren der Ansprüche 1 bis 9 durchführt.

## Revendications

1. Procédé pour gérer la surcharge d'u serveur, comprenant :
- la fourniture d'une partie ou de la totalité des fonctionnalités d'une application serveur (2) par une fonction serveur ; ladite fonction serveur comprenant une ou plusieurs fonctions de serveur délestables qui fournissent une partie ou la totalité des fonctionnalités de l'application serveur, et qui peuvent être chargées sur d'autres ressources ;
- la détection d'une charge de serveur par une fonction de détection de charge (3) construite pour déterminer si la fonction de serveur se trouve dans une situation de surcharge ou proche de cette dernière ; et
- la fourniture de fournisseurs de ressources (5, 18) aptes à fournir des ressources pour héberger lesdites fonctions de serveur détestables,
- la sélection de l'une des ressources parmi les fournisseurs de ressources, par une fonction de recherche de fournisseur de ressources (4) comprise dans le serveur ;
- la redirection de demandes client détectées (8) vers une fonction de serveur délestée (23) sur la ressource sélectionnée (3, 6) en réponse à la fonction de détection de charge détectant une situation de surcharge,
le procédé étant **caractérisé en ce qu'**il comprend en outre
- la récupération d'adresses de dispositifs de communication qui sont proches de sources d'attaques en amont ;
- la transmission de la fonction de serveur délestée à un fournisseur de ressources en position de défense en amont.

2. Procédé selon la revendication 1, dans lequel une sélection est fournie par une annonce de demande client indiquant une ressource sélectionnable.

3. Procédé selon la revendication 1, dans lequel la fonction de serveur délestée est exécutable sur un fournisseur de ressources et dans lequel la fonction de serveur délestée comprend à son tour des fonctions de serveur délestées qui fournissent une partie ou la totalité des fonctionnalités de l'application serveur, et qui peuvent être chargées sur d'autres ressources dans un autre emplacement réseau.

4. Procédé selon l'une quelconque des revendications précédentes, dans lequel les fournisseurs de ressources comprennent des ressources physiques et/ou virtuelles.

5. Procédé selon la revendication 4, dans lequel les ressources physiques comprennent au moins une ressource parmi la charge CPU, et la bande passante de communication.

6. Procédé selon la revendication 4 ou 5, dans lequel les ressources non physiques comprennent au moins une ressource parmi un nombre de lectures de base de données par unité de temps, un nombre d'écritures de base de données par unité de temps, un nombre de demandes par unité de temps et un nombre de sessions simultanées.

7. Procédé selon l'une quelconque des revendications précédentes, dans lequel un système de traitement d'informations comprend des moyens de contrôle du système, des moyens d'interface et des moyens d'application client, et dans lequel le procédé comprend les étapes suivantes lorsque le système de traitement d'informations est surchargé ou menace de l'être :
- il est détecté si les moyens de contrôle du système, les moyens d'interface ou les moyens d'application client concernés sont ou menacent d'être surchargés ;
- il est détecté si un accès demandé va charger les moyens de contrôle du système, les moyens d'interface ou les moyens d'application client concernés ;
- si l'accès demandé n'est pas réputé contribuer à la surcharge des moyens de système concernés, l'accès demandé est jugé recevable et/ou si l'accès demandé est réputé charger les moyens de système concernés, l'accès demandé est jugé non-recevable.

8. Procédé selon la revendication 7, plusieurs clients demandant l'accès au système de traitement de l'information et des indicateurs de niveau de service étant attribués à ces clients, le procédé comprenant le fait que si le type d'accès demandé est réputé contribuer à la surcharge du système, l'accès demandé par les clients ayant un indicateur de niveau de service relativement élevé reçoivent une préférence ou une priorité par rapport aux clients ayant un indicateur de niveau de service relativement bas.

9. Procédé selon l'une quelconque des revendications 7 ou 8, dans lequel l'accès demandé, réputé contribuer à la surcharge du système, est jugé recevable pour les clients ayant un indicateur de niveau de service relativement élevé et/ou non recevable pour les clients ayant un indicateur de niveau de service relativement bas.

10. Système de gestion d'une demande d'accès à un système de traitement d'informations, comprenant un appareil qui est connecté en communication au système de traitement d'informations, moyennant quoi l'appareil est en outre connecté à un réseau pour transmettre la demande d'accès, **caractérisé en ce que** le système comprend des moyens adaptés pour exécuter les étapes des revendications 1 à 9.

11. Support d'enregistrement non transitoire lisible par ordinateur avec des instructions de programme qui, lorsqu'elles sont exécutées sur un système selon la revendication 10, amènent le système à exécuter le procédé des revendications 1 à 9.
